# EUROPÄISCHE PATENTSCHRIFT

(11) **EP 2 353 974 B1**
(45) Veröffentlichungstag und Bekanntmachung des Hinweises auf die Patenterteilung: **31.10.2012**
(21) Anmeldenummer: 11000255.7
(22) Anmeldetag: 14.01.2011
(51) Int. Cl.: B62D 25/08

(54) **Fahrzeugkarosserieaufbau im Bereich einer Federbeinaufnahme**
Vehicle body structure in the area of the suspension strut support.
Montant d'une structure de carrosserie de véhicule automobile dans la région de la jambe de suspension

(30) Priorität: 10.02.2010 DE 102010007380
(43) Veröffentlichungstag der Anmeldung: 10.08.2011
(73) Patentinhaber: Audi AG, 85045 Ingolstadt (DE)
(72) Erfinder: Urban, Tobias, 74354 Besigheim-Ottmarsheim (DE); Kühl, Sönke, 69120 Heidelberg (DE); Neufeldt, Christian, 74177 Bad Friedrichshall (DE); Holl, Werner, 74196 Neuenstadt (DE)

(56) Entgegenhaltungen:
- EP-A2- 1 880 784
- DE-A1-102008 050 297

## Beschreibung

Die Erfindung betrifft einen Fahrzeugkarosserieaufbau im Bereich einer Federbeinaufnahme nach dem Oberbegriff des Anspruchs 1.

Der Karosserieaufbau im Bereich des Vorderwagens weist üblicherweise zwei bezüglich der Fahrzeuglängsmitte gegenüberliegende untere Längsträger sowie entsprechende dazu höher und zur Fahrzeugaußenseite hin versetzt liegende Kotflügelbänke als stabile Hohlträger auf. Dazwischen jeweils angeordnete Federbeinaufnahmen sind stabile Karosseriebauteile mit einem Dombereich sowie einem unteren Anschlussbereich zur Anbindung an den zugeordneten Längsträger und mit einem oberen Anschlussbereich zur Anbindung an die zugeordnete Kotflügelbank. Für diese Anbindungen sind unterschiedlich gestaltete Anschlussbereiche und Fügetechniken allgemein bekannt. Die Lage- und Anbindungsgeometrie ist dabei im Wesentlichen durch die toleranzbehaftete Anordnung der Längsträger und den Verbund Kotflügelbank/A-Säule vorgegeben. Dadurch sind unter anderem auch wesentliche Funktionsmaße der Karosserie, wie beispielsweise die Fahrzeugbreite, Lage und Frontend/Kotflügel und so weiter definiert. Das Fahrwerk ist demgegenüber entsprechend seinen Anforderungen auszurichten, wobei Karosserietoleranzen auszugleichen sind. Dazu ist es allgemein bekannt, bei der Anbindung der jeweiligen Federbeinaufnahme durch eine geeignete Anbindungsgeometrie einen Toleranzausgleich in Z-Richtung (Hochrichtung) mit gegebenenfalls teilweisem Toleranzausgleich in Y-Richtung (Querrichtung) durchzuführen bei einer Verblockung in X-Richtung (Fahrzeuglängsrichtung) und/oder Y-Richtung. Eine insgesamt freie Einstellbarkeit einer Federbeinaufnahme in allen drei Raumrichtungen ist dabei nicht gegeben, so dass insbesondere bei größeren erforderlichen Toleranzausgleichen Nacharbeiten, zum Beispiel eine Nachstellung des Fahrwerks nach der Hochzeit (Verbindung der Karosserie mit dem Fahrwerk) erforderlich werden.

Aus der DE 10 2008 050297 A1 ist ein gattungsgemäßer Fahrzeugkarosserieaufbau bekannt. Dieser weist einen unteren Längsträger und eine demgegenüber nach oben und zur Fahrzeugaußenseite versetzt liegende Kotflügelbank, wobei die Federbeinaufnahme anschließend an ihren Dombereich mit einem unteren Anschlussbereich am Längsträger und mit einem oberen Anschlussbereich an der Kotflügelbank angebunden ist. Die Federbeinaufnahme weist im oberen Anschlussbereich wenigstens eine etwa horizontal ausgerichtete Kotflügelbank-Anlagewand auf, mit der die Federbeinaufnahme an einer zugeordneten Kotflügelbank-Anlagegegenwand der Kotflügelbank anliegt und verbunden ist, wobei Freiräume für eine Relativverschiebung zwischen Federbeinaufnahme und Kotflügelbank zu einem Toleranzausgleich in X-Richtung (in Fahrzeuglängsrichtung) und in Y-Richtung (in Fahrzeugquerrichtung) vor der Verbindung vorgesehen sind.

Aufgabe der Erfindung ist es, einen gattungsgemäßen Fahrzeugkarosserieaufbau im Bereich der Federbeinaufnahmen so weiterzubilden, dass ein einfacher Toleranzausgleich in Verbindung mit einer stabilen und steifen Anbindung einer Federbeinaufnahme an einem unteren Längsträger und an einer Kotftügelbank möglich ist.

Die Aufgabe ist durch die Merkmale des Patentanspruches 1 gelöst. Bevorzugte Weiterbildungen der Erfindung sind in den abhängigen Ansprüchen offenbart.

Diese Aufgabe wird dadurch gelöst, dass die Federbeinaufnahme im oberen Anschlussbereich wenigstens eine etwa horizontal ausgerichtete Kotflügelbank-Anlagewand aufweist, mit der die Federbeinaufnahme an einer zugeordneten Kotflügelbank-Anlagegegenwand der Kotflügelbank anliegt und verbunden ist. Dabei sind Freiräume für eine Relatiwerschiebung zwischen Federbeinaufnahme und Kotflügelbank in der Anlagefläche zu einem Toleranzausgleich in X-Richtung (in Fahrzeuglängsrichtung) und in Y-Richtung (in Fahrzeugquerrichtung) vor der Verbindung vorgesehen.

Diese Verbindung zum Verbund Kotflügelbank/A-Säule bietet somit einen Toleranzausgleich in X-Richtung und in Y-Richtung.

Entsprechend ist eine Federbeinaufnahme im unteren Anschlussbereich mit einer etwa vertikal ausgerichteten Längsträger-Anlagewand mit einer vertikalen Längsträger-Anlagewand des unteren Längsträgers verbunden, wodurch vor der Verbindung ein Toleranzausgleich in Z-Richtung (Hochrichtung) möglich ist.

Somit ist insgesamt die Federbeinaufnahme in allen Richtungen einstellbar und kann bezüglich den Anforderungen des Fahrwerks ausgerichtet werden ohne andere Funktionsmaße, beispielsweise die durch den Verbund Kotflügelbank/A-Säule definierte Fahrzeugbreite oder die durch die Kotflügelbank definierte Lage Frontend/Kotflügel zu beeinflussen. Dies kann je nach den Toleranzgegebenheiten vorteilhaft Nacharbeiten, beispielsweise Nachstellen des Fahrwerks ersparen.

Erfindungsgemäß ist die Kotflügelbank als kastenförmiger Hohlträger ausgebildet mit einer Kotflügelbank-Oberwand, einer Kotflügelbank-Unterwand und einer seitlichen, gegebenenfalls schräg gestellten, zur Fahrzeugslängsmitte hin liegenden Kotflügelbank-Innenwand. Die Federbeinaufnahme ist dazu im oberen Anschlussbereich im Querschnitt Z-förmig ausgebildet, dergestalt dass die beiden Z-Schenkel die Kotflügelbank-Anlagewände sind, mit denen die Federbeinaufnahme einerseits an der Kotflügelbank-Unterwand und andererseits an einem von der Kotflügelbank-Oberwand etwa horizontal abragenden Anlagesteg von unten her anliegt und jeweils dort verbunden ist. Zwischen der Kotflügelbank-Innenwand und der Z-Basiswand der Federbeinaufnahme liegt dabei ein Spalt als Freiraum für den Toleranzausgleich in Y-Richtung. Die Spaltbreite ist so groß, dass alle Relativverschiebungen für einen maximal auftretenden Toleranzausgleich in Y-Richtung möglich sind. Die Verbindung und Verblockung erfolgt damit hier in zwei versetzten Z-Schenkelebenen in Z-Richtung für eine momentensteife Einwurzelung bei gleichzeitiger Toleranzausgleichmöglichkeit in X- und Y-Richtung.

In der konkreten Ausführungsform ist zudem der Längsträger ein im Querschnitt etwa rechteckiger Hohlträger mit einer Längsträger-Oberwand, mit einer zur Fahrzeuglängsmitte hin liegenden Längsträger-Innenwand und mit einer zur Fahrzeugaußenseite hin liegenden Längsträger-Außenwand. Die Federbeinaufnahme ist dabei im unteren Anschlussbereich im Querschnitt Z-förmig ausgebildet, dergestalt dass die beiden Z-Schenkel die Längsträgeranlagewände sind, mit denen die Federbeinaufnahme einerseits an der Längsträger-Innenwand und andererseits an einem vom der Längsträger-Außenwand etwa vertikal abragenden Anlagesteg von der Fahrzeuglängsmitte hier anliegt und jeweils dort verbunden ist. Zwischen der Längsträger-Oberwand und der vertikal oder schräg angestellten Z-Basiswand der Federbeinaufnahme ist auch hier ein Freiraum für einen Toleranzausgleich in Z-Richtung vorgesehen, wobei der Freiraum so groß gewählt ist, dass alle möglichen in dieser Richtung auftretenden Toleranzen ausgeglichen werden können. Die Verbindung und Verblockung der Z-Schenkel erfolgt hier zweckmäßig in Y-Richtung ebenfalls in zwei versetzt angeordneten Ebenen für eine momentensteife Einwurzelung.

Für eine stabile und steife Ausführung der Federbeinaufnahme in Verbindung mit einer Leichtbauweise wird zudem vorgeschlagen, die Federbeinaufnahme als Gussteil, vorzugsweise als Aluminiumdruckgussteil auszuführen.

Entsprechend können auch die Kotflügelbank im Verbund mit der A-Säule und/oder der zugeordnete Längsträger als Strangprofil oder als zusammengefügter Hohlträger vorzugsweise aus Leichtbaumaterial, insbesondere aus Aluminiummaterial hergestellt sein.

Anhand einer Zeichnung wird die Erfindung näher erläutert.

Es zeigen:
- Fig. 1: eine perspektivische Draufsicht auf einen Teil eines Fahrzeugkarosserieaufbaus im Bereich einer vorderen linken Federbeinaufnahme,
- Fig. 2: eine vergrößerte Darstellung des Bereichs A aus Fig. 1 mit Blickrichtung von der Fahrzeugaußenseite her,
- Fig. 3: eine schematische Schnittdarstellung entlang der Linie B-B aus Fig. 2,
- Fig. 4: eine schematische, vergrößerte Querschnittdarstellung im Bereich C aus Fig. 1 einer ersten Ausführungsform, und
- Fig. 5: eine Darstellung entsprechend Fig. 4 einer zweiten Ausführungsform.

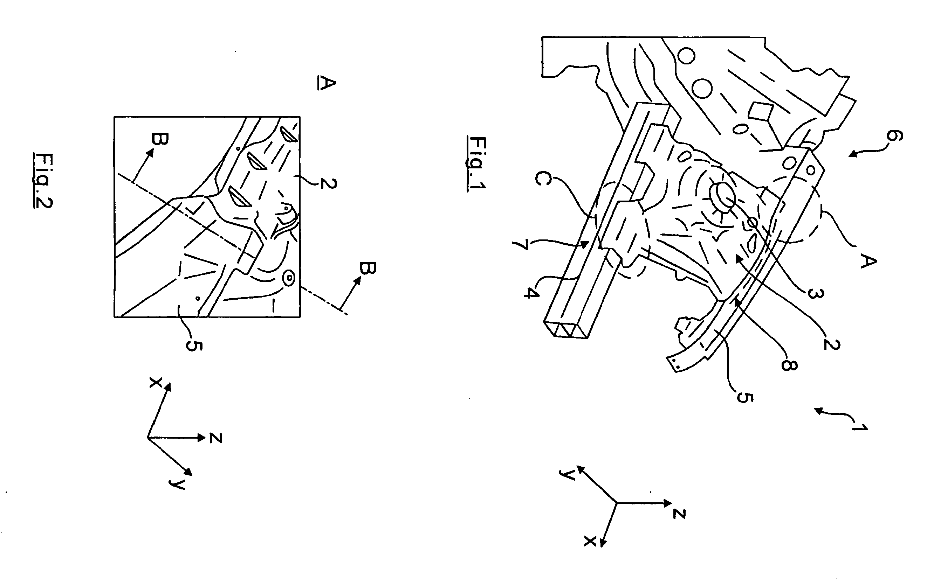

In Fig. 1 ist eine perspektivische Ansicht eines Fahrzeugkarosserieaufbaus 1 im Bereich einer vorderen linken Federbeinaufnahme 2 dargestellt. Die Federbeinaufnahme 2 weist einen mittleren Dombereich 3 auf und erstreckt sich einerseits nach unten zu einem unteren Längsträger 4 sowie nach seitlich oben außen zu einer Kotflügelbank 5, die einen Verbund mit einer (weiter nicht dargestellten) A-Säule 6 bildet.

Die Federbeinaufnahme 2 ist mit einem unteren Anschlussbereich 7 am Längsträger 4 und mit einem oberen Anschlussbereich 8 an der Kotflügelbank 5 stabil angebunden. Die Federbeinaufnahme 2 ist hier als Aluminiumdruckgussteil ausgeführt. Der Längsträger 4 ist ein im Querschnitt etwa rechteckiger Hohlträger als Aluminiumstrangprofil und die Kotflügelbank 5 ist ein aus Blechelementen gefügter Hohlträger.

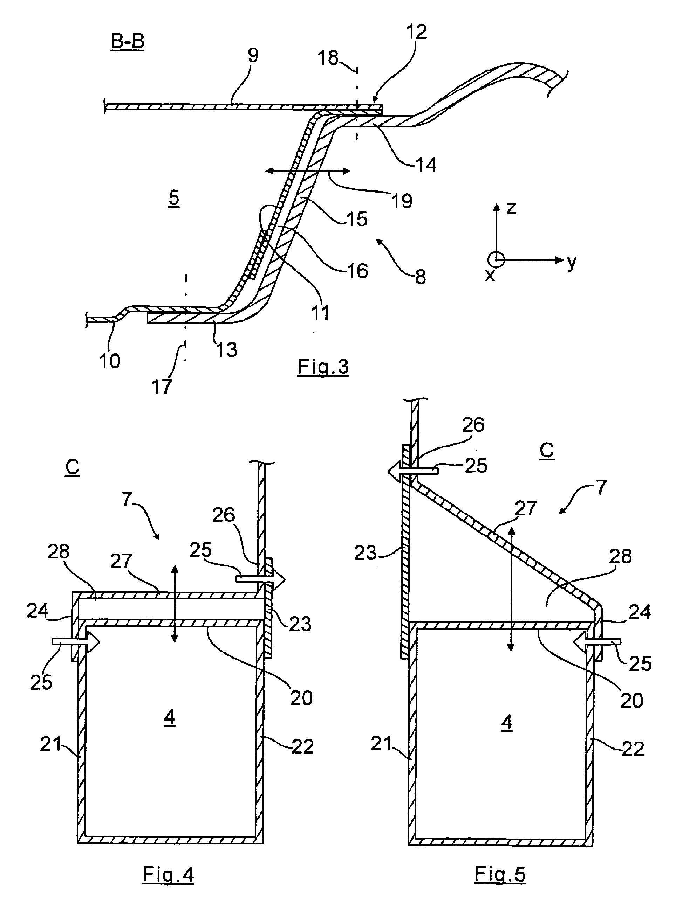

Anhand der Figuren 2 und 3 wird die Verbindung der Federbeinaufnahme 2 mit der Kotflügelbank 5 näher erläutert. Wie insbesondere aus Fig. 3 ersichtlich, ist die Kotflügelbank 5 als kastenförmiger Hohlträger ausgebildet mit einer Kotflügelbank-Oberwand 9 (hier als Hohlträgerschließblech, welches in Fig. 2 der Übersichtlichkeit wegen nicht gezeigt ist), einer Kotflügelbank-Unterwand 10 und einer seitlichen, etwas schräg gestellten, zur Fahrzeuglängsmitte hin liegenden Kotflügelbank-Innenwand 11. Die Kotflügelbank-Oberwand 9 sowie ein oben abgekröpfter Falzbereich der Kotflügelbank-Innenwand 11 bilden einen etwa horizontal abragenden Anlagesteg 12.

Die Federbeinaufnahme ist im oberen Anschlussbereich 8 ersichtlich im Querschnitt Z-förmig ausgebildet mit zwei parallel versetzt liegenden Z-Schenkeln 13, 14 und einer dazwischen liegenden Z-Basiswand 15. Der untere Z-Schenkel 13 liegt dabei an der Kotflügelbank-Unterwand 10 und der obere Z-Schenkel 14 am Anlagesteg 12 jeweils von unten her und ebenenversetzt an der Kotflügelbank 5 an. Zwischen der Kotflügelbank-Innenwand 11 und der Z-Basiswand 15 liegt ein Freiraum als Spalt 16, so dass vor der Verbindung und Verblockung im Bereich der Z-Schenkel 13, 14 (schematisch dargestellt durch strichpunktierte Linien 17, 18) ein Toleranzausgleich in Y-Richtung (Pfeil 19) gegebenenfalls in Verbindung mit einer Längsverschiebung für einen Toleranzausgleich in X-Richtung möglich ist.

Die Anbindung der Federbeinaufnahme 2 am unteren Längsträger 4 im Bereich des unteren Anschlussbereichs 7 wird anhand der schematischen Figuren 4 und 5 näher erläutert. Dort ist jeweils der im Querschnitt rechtwinkelige untere Längsträger 4 dargestellt mit einer Längsträger-Oberwand 20, mit einer zur Fahrzeuglängsmitte hin liegenden Längsträger-Innenwand 21 und einer zur Fahrzeugaußenseite hin liegenden Längsträger-Außenwand 22. Ein Zusatzblech der Längsträgerschweißgruppe ragt in Fig. 4 als Anlagesteg 23 von der Längsträger-Außenwand 22 vertikal nach oben ab. Ein entsprechender Anlagesteg 23 ragt auch in Fig. 5 in der dortigen, etwa modifizierten Ausführungsform von der Längsträger-Innenwand 21 vertikal nach oben ab.

Der untere Anschlussbereich 7 der Federbeinaufnahme 2 ist jeweils Z-förmig ausgebildet. In Fig. 4 liegt ein nach unten abragender Z-Schenkel 24 an der Längsträger-Innenwand 21 von außen her an, während in der modifizierten Ausführungsform nach Fig. 5 der nach unten abragende Z-Schenkel 24 an der Längsträger-Außenwand 22 anliegt und jeweils dort (nach einem Toleranzausgleich) durch Befestigungsmittel 25 verblockt ist. Zudem liegt der obere Z-Schenkelbereich 26 jeweils am Anlagesteg 23 an und ist dort ebenfalls mit Befestigungsmitteln 25 verblockt. In Fig. 4 ist die Z-Basiswand 27 horizontal und in der modifizierten Ausführungsform nach Fig. 5 schräg ausgerichtet, wobei jeweils zwischen der Längsträger-Oberwand 20 und der Z-Basiswand 27 ein Freiraum für eine Relativverschiebung (Pfeil 28) zu einem Toleranzausgleich in Z-Richtung liegt.

## Patentansprüche

1. Fahrzeugkarosserieaufbau (1) im Bereich einer Federbeinaufnahme (2) mit einem unteren Längsträger (4) und einer demgegenüber nach oben und zur Fahrzeugaußenseite versetzt liegenden Kotflügelbank (5), wobei die Federbeinaufnahme (2) anschließend an ihren Dombereich (3) mit einem unteren Anschlussbereich (7) am Längsträger (4) und mit einem oberen Anschlussbereich (8) an der Kotflügelbank (5) angebunden ist, wobei die Federbeinaufnahme (2) im oberen Anschlussbereich (8) wenigstens eine etwa horizontal ausgerichtete Kotflügelbank-Anlagewand (13, 14) aufweist, mit der die Federbeinaufnahme (2) an einer zugeordneten Kotflügelbank-Anlagegegenwand (10, 12) der Kotflügelbank (5) anliegt und verbunden ist, wobei Freiräume (16) für eine Relativverschiebung zwischen Federbeinaufnahme (2) und Kotflügelbank (5) zu einem Toleranzausgleich in X-Richtung Gzw. Fahrzeuglängsrichtung und in Y-Richtung Gzw. Fahrzeugquerrichtung vor der Verbindung (17, 18) vorgesehen sind, **dadurch gekennzeichnet,**
**dass** die Kotflügelbank (5) als kastenförmiger Hohlträger ausgebildet ist mit einer Kotflügelbank-Oberwand (9), einer Kotflügelbank-Unterwand (10) und einer seitlichen, gegebenenfalls schräg gestellten, zur Fahrzeuglängsmitten hin liegenden Kotflügelbank-Innenwand (11),
**dass** die Federbeinaufnahme (2) im oberen Anschlussbereich im Querschnitt Z-förmig ausgebildet ist, dergestalt dass die beiden Z-Schenkel (13, 14) die Kotflügelbank-Anlagewände sind, mit denen die Federbeinaufnahme (2) einerseits an der Kotflügelbank-Unterwand (10) und andererseits an einem von der Kotflügelbank-Oberwand (9) etwa horizontal abragenden Anlagesteg (12) von unten her anliegt und jeweils dort verbunden (17, 18) ist, und
**dass** zwischen der Kotflügelbank-Innenwand (11) und der Z-Basiswand (15) der Federbeinaufnahme (2) ein Spalt (16) als Freiraum für den Toleranzausgleich in Y-Richtung liegt.

2. Fahrzeugkarosserieaufbau nach Anspruch 1, **dadurch gekennzeichnet, dass** die Federbeinaufnahme (2) im unteren Anschlussbereich (7) wenigstens eine etwa vertikal ausgerichtete Längsträger-Anlagewand (24, 26) aufweist, mit der die Federbeinaufnahme (2) an einer zugeordneten Längsträger-Anlagegegenwand (21, 23) des unteren Längsträgers (4) anliegt und verbunden ist, wobei Freiräume (28) für eine Relativverschiebung zwischen Federbeinaufnahme (2) und Längsträger (4) zu einem Toleranzausgleich in Z-Richtung (in Hochrichtung) und in X-Richtung (in Fahrzeuglängsrichtung) vor der Verbindung (25) vorgesehen sind, und dass der Längsträger (4) ein im Querschnitt etwa rechteckiger Hohlträger ist mit einer Längsträger-Oberwand (20), mit einer zur Fahrzeuglängsmitte hin liegenden vertikalen Längsträger-Innenwand (21) und mit einer zur Fahrzeugaußenseite hin liegenden vertikalen Längsträger-Außenwand (22),
dass die Federbeinaufnahme (2) im unteren Anschlussbereich (7) im Querschnitt Z-förmig ausgebildet ist, dergestalt dass die beiden Z-Schenkel (24, 26) die Längsträgeranlagewände sind, mit denen die Federbeinaufnahme (2) einerseits an der Längsträger-Innenwand (21) und andererseits an einem von der Längsträger-Außenwand (22) etwa vertikal abragenden Anlagesteg (23) von der Fahrzeuglängsmitte her anliegt und jeweils dort verbunden (25) ist, und
**dass** zwischen der Längsträger-Oberwand (20) und der vertikal oder schräg angestellten Z-Basiswand (27) der Federbeinaufnahme (2) ein Freiraum (28) für den Toleranzausgleich in Z-Richtung liegt.

3. Fahrzeugkarosserieaufbau nach Anspruch 1 oder 2, **dadurch gekennzeichnet, dass** die Verbindung und Verblockung (17, 18) der Z-Schenkel (13, 14) in Z-Richtung in zwei versetzt angeordneten Ebenen für eine momentensteife Einwurzelung erfolgt.

4. Fahrzeugkarosserieaufbau nach Anspruch 2 oder 3, **dadurch gekennzeichnet, dass** die Verbindung und Verblockung (25) der Z-Schenkel (24, 26) hier in Y-Richtung in zwei versetzt angeordneten Ebenen für eine momentensteife Einwurzelung erfolgt.

5. Fahrzeugkarosserieaufbau nach einem der Ansprüche 1 bis 4, **dadurch gekennzeichnet, dass** die Federbeinaufnahme (2) als Gussteil, vorzugsweise als Aluminiumdruckgussteil hergestellt ist.

6. Fahrzeugkarosserieaufbau nach einem der Ansprüche 1 bis 5, **dadurch gekennzeichnet, dass** die Kotflügelbank (5) im Verbund mit der A-Säule (6) und/oder der Längsträger (4) als Strangprofil oder als zusammengefügter Hohlträger vorzugsweise aus Leichtbaumaterial, insbesondere aus Aluminiummaterial hergestellt sind.

## Claims

1. Vehicle body structure (1) in the region of a suspension strut mounting (2), comprising a lower longitudinal member (4) and a mudguard support (5) offset therefrom upwards and towards the outside of the vehicle, the suspension strut mounting (2) being fastened, adjacent to its tower region (3), by a lower connection region (7) to the longitudinal member (4) and by an upper connection region (8) to the mudguard support (5), the suspension strut mounting (2) comprising in the upper connection region (8) at least one approximately horizontally oriented mudguard support contact wall (13, 14) by which the suspension strut mounting (2) rests against and is connected to an assigned mudguard support counter contact wall (10, 12) of the mudguard support (5), free spaces (16) for relative displacement between the suspension strut mounting (2) and the mudguard support (5) for tolerance compensation in the X-direction or longitudinal direction of the vehicle and in the Y-direction or transverse direction of the vehicle being provided in front of the connection (17, 18), **characterised in that** the mudguard support (5) is designed as a box-shaped hollow carrier comprising a mudguard support upper wall (9), a mudguard support lower wall (10) and a lateral, optionally obliquely oriented mudguard support inner wall (11) located towards the longitudinal centre line of the vehicle, **in that** the suspension strut mounting (2) has a Z-shaped cross-section in the upper connection region, such that the two Z arms (13, 14) are the mudguard support contact walls by which the suspension strut mounting (2) rests against, from below, and is connected to (17, 18) the mudguard support lower wall (10) on the one hand, and to a contact web (12) projecting approximately horizontally from the mudguard support upper wall (9) on the other hand, and **in that** between the mudguard support inner wall (11) and the Z main wall (15) of the suspension strut mounting (2) there is a gap (16) as a free space for the tolerance compensation in the Y-direction.

2. Vehicle body structure according to claim 1, **characterised in that** the suspension strut mounting (2) comprises, in the lower connection region (7), at least one approximately vertically oriented longitudinal member contact wall (24, 26) by which the suspension strut mounting (2) rests against and is connected to an assigned longitudinal member counter contact wall (21, 23) of the lower longitudinal member (4), free spaces (28) for relative displacement between the suspension strut mounting (2) and the longitudinal member (4) for tolerance compensation in the Z-direction (in the vertical direction) and in the X-direction (in the longitudinal direction of the vehicle) being provided in front of the connection (25), and **in that** the longitudinal member (4) is a hollow carrier having an approximately rectangular cross-section and comprising a longitudinal member upper wall (20), a vertical longitudinal member inner wall (21) located towards the longitudinal centre line of the vehicle, and a vertical longitudinal member outer wall (22) located towards the outside of the vehicle, **in that** the suspension strut mounting (2) has, in the lower connection region (7), a Z-shaped cross-section, such that the two Z arms (24, 26) are the longitudinal member contact walls by which the suspension strut mounting (2) rests against, from the longitudinal centre line of the vehicle, and is connected to (25) the longitudinal member inner wall (21) on the one hand, and to a contact web (23) projecting approximately vertically from the longitudinal member outer wall (22) on the other hand, and **in that** between the longitudinal member upper wall (20) and the vertically or obliquely oriented Z main wall (27) of the suspension strut mounting (2) there is a free space (28) for the tolerance compensation in the Z-direction.

3. Vehicle body structure according to either claim 1 or claim 2, **characterised in that** the Z arms (13, 14) are connected and locked (17, 18) in the Z-direction in two offset planes for moment-rigid rooting.

4. Vehicle body structure according to either claim 2 or claim 3, **characterised in that** the Z arms (24, 26) are connected and locked (25), in this case in the Y-direction, in two offset planes for moment-rigid rooting.

5. Vehicle body structure according to any of claims 1 to 4, **characterised in that** the suspension strut mounting (2) is produced as a casting, preferably as an aluminium pressure die casting.

6. Vehicle body structure according to any of claims 1 to 5, **characterised in that** the mudguard support (5), together with the A-pillar (6) and/or the longitudinal member (4), is produced as an extruded profile or as an assembled hollow carrier, preferably made of lightweight material, in particular of aluminium material.

## Revendications

1. Structure (1) de carrosserie de véhicule automobile dans la zone d'un logement (2) de jambe de force à ressort avec une poutre longitudinale inférieure (4) et un siège d'aile (5) se trouvant en regard vers le haut et décalé vers la face externe du véhicule, dans laquelle le logement (2) de jambe de force à ressort est lié, en position adjacente à sa zone de broche (3), à une zone de raccordement inférieure (7) sur la poutre longitudinale (4) et à une zone de raccordement supérieure (8) sur le siège d'aile (5), dans lequel le logement (2) de la jambe de force à ressort présente, dans la zone de raccordement supérieure (8), au moins une paroi d'appui (13, 14) du siège d'aile orienté à peu près horizontalement, sur laquelle paroi le logement (2) de jambe de force à ressort s'appuie et est reliée à une contre-paroi d'appui (10, 12) affectée du siège d'aile (5), dans lequel des espaces libres (16) sont prévus pour un déplacement relatif entre le logement (2) de jambe de force à ressort et le siège d'aile (5) avec une compensation de tolérance dans la direction X ou direction longitudinale du véhicule et dans la direction Y ou direction transversale du véhicule avant la liaison (17, 18), **caractérisée en ce que** le siège d'aile (5) se présente sous la forme d'une poutre creuse en forme de caisson avec une paroi supérieure (9) du siège d'aile, une paroi inférieure (10) du siège d'aile et une paroi intérieure (11) du siège d'aile qui est latérale, éventuellement inclinée, se trouvant vers le centre longitudinal du véhicule, **en ce que** le logement (2) de jambe de force à ressort est conformé en Z en coupe transversale dans la zone de raccordement supérieure de sorte que les deux branches (13, 14) du Z soient les parois d'appui du siège d'aile, avec lesquelles le logement (2) de jambe de force à ressort s'applique, d'une part, sur la paroi inférieure (10) du siège d'aile et, d'autre part, sur une traverse d'appui (12) dépassant plus ou moins horizontalement de la paroi supérieure (9) du siège d'aile (12) depuis le bas et y est relié respectivement (17, 18), et
**en ce qu'**un intervalle (16) représente un espace libre pour la compensation de tolérance dans la direction Y entre la paroi intérieure (11) du siège d'aile et la paroi de base (15) du Z du logement (2) de jambe de force à ressort.

2. Structure de carrosserie de véhicule automobile selon la revendication 1, **caractérisée en ce que** le logement (2) de jambe de force à ressort présente dans la zone de raccordement inférieure (7) au moins une paroi d'appui (24, 26) de la poutre longitudinale orientée plus ou moins verticalement, par laquelle paroi le logement (2) de jambe de force à ressort s'appuie sur une contre-paroi d'appui (21, 23) de la poutre longitudinale affectée (4) et lui est reliée, dans laquelle des espaces libres (28) sont prévus pour un déplacement relatif entre le logement (2) de jambe de force à ressort et la poutre longitudinale (4) pour une compensation de tolérance dans la direction Z (dans la direction vers le haut) et dans la direction X (dans la direction longitudinale du véhicule) avant la liaison (25), et **en ce que** la poutre longitudinale (4) est une poutre creuse plus ou moins rectangulaire en coupe transversale avec une paroi supérieure (20) de la poutre longitudinale, avec une paroi interne (21) de la poutre longitudinale verticale qui se trouve vers le centre longitudinal du véhicule et avec une paroi externe (22) de la poutre longitudinale qui est verticale et se trouve vers la face externe du véhicule,
**en ce que** le logement (2)de jambe de force à ressort est conformé en Z en coupe transversale dans la zone de raccordement inférieure (7) de sorte que les deux branches (24, 26) du Z soient des parois d'appui de la poutre longitudinale avec lesquelles le logement (2) de jambe de force à ressort s'appuie, d'une part, sur la paroi interne (21) de la poutre longitudinale et, d'autre part, sur une traverse d'appui (23) faisant saillie plus ou moins verticalement et qui s'applique sur une paroi externe (22) à partir du centre longitudinal du véhicule et s'y fixe respectivement (25), et
**en ce que**, entre la paroi supérieure (20) de la poutre longitudinale et la paroi de base Z (27) disposée verticalement ou en oblique du logement (2) de jambe de force à ressort, un espace libre (28) est disposé pour la compensation de tolérance dans la direction Z.

3. Structure de carrosserie de véhicule automobile selon la revendication 1 ou 2, **caractérisée en ce que** la liaison et le blocage (17, 18) des branches (13, 14) du Z se font dans la direction Z dans deux plans décalés l'un de l'autre pour un engagement rigide aux moments.

4. Structure de carrosserie de véhicule selon la revendication 2 ou 3, **caractérisé en ce que** la liaison et le blocage (25) des ailes (24, 26) du Z se font ici dans la direction Y dans deux plans agencés en décalage pour un engagement rigide aux moments.

5. Structure de carrosserie de véhicule automobile selon l'une quelconque des revendications 1 à 4, **caractérisé en ce que** le logement (2) de jambe de force à ressort est fabriqué sous la forme d'une pièce coulée, de préférence sous la forme d'une pièce coulée sous pression en aluminium.

6. Structure de carrosserie de véhicule automobile selon l'une quelconque des revendications 1 à 5, **caractérisée en ce que** le siège d'aile (5) en liaison avec la colonne A (6) et/ou la poutre longitudinale (4) sont fabriqués sous la forme de profilés extrudés ou de poutres creuses assemblées, de préférence en matériau de construction léger, en particulier un matériau à base d'aluminium.
